Europäisches Patentamt

European Patent Office

Office européen des brevets

(11) Publication number: **0 180 942**
**A2**

(12) **EUROPEAN PATENT APPLICATION**

(21) Application number: 85113980.8

(51) Int. Cl.⁴: **H 02 M 7/34**

(22) Date of filing: 04.11.85

(30) Priority: 05.11.84 US 668218

(43) Date of publication of application:
14.05.86 Bulletin 86/20

(84) Designated Contracting States:
BE DE FR GB IT LU NL

(71) Applicant: WESTERN GEAR CORPORATION
2600 East Imperial Highway
Lynwood California(US)

(72) Inventor: Halliday, William M.
620 East Laurel Avenue
Glendora California 91740(US)

(74) Representative: Howden, Christopher Andrew et al,
FORRESTER & BOEHMERT Widenmayerstrasse 4/I
D-8000 München 22(DE)

(54) DC-to-AC inverter apparatus.

(57) Apparatus for converting dc electrical power to ac electrical power, comprising dc winding means and ac winding means, each winding means including a plurality of turns and being fixed in relation to one another; a ring of high permeability material encircling the winding means, in closely-spaced relationship, and switching means for selectively connecting dc electrical power to separate turns of the dc winding means in a prescribed sequence, to produce a magnetic flux pattern that rotates around the fixed position dc winding in a predetermined fashion thereby to induce an ac electrical power signal in the ac winding means.

ROTATING BRUSH/
STATIC COMMUTATOR

SWITCHED FIELD WINDING/ PRIMARY LEADS

DC IN

SLIP RINGS

DRIVE MOTOR

AC OUT

FIG. 1.

Croydon Printing Company Ltd.

"DC to AC Inverter Apparatus"

This invention relates generally to dc-to-ac inverters, and, more particularly, to inverters of this kind that do not involve an intermediate mechanical energy phase.

It is frequently necessary to produce ac electrical power where only dc electrical power is available. One common technique for doing this utilizes a switching inverter, in which do electrical current is switched through successive turns of a primary winding of transformer, to induce a corresponding ac current in a secondary winding of the transformer. The switching can be accomplished using, for example, transistors, reed switches, or a rotating brush assembly and commutator. One disadvantage of this approach is that the waveform of the ac current is substantially the same as that of the switched dc current flowing through the transformer's primary winding. Low-pass filtering is ordinarily required to produce a pure sine wave ac signal. This, of course, can introduce significant inefficiencies. In addition, use of such an inverter at high power levels can generate significant electromagnetic interference.

Another technique for converting dc electrical power to ac electrical power is to utilize a dc motor to drive mechanically an ac generator. The ac generator can be appropriately configured to provide an ac power signal having a selected frequency, voltage and number of phases and having a wave shape with minimum harmonic content, thus avoiding the need for low-pass filtering. The winding of the dc motor and of the ac generator can be located in the same slots of a common rotating magnetic iron structure, which constitutes a synchronous inverter. This configuration is likewise believed to be somewhat inefficient, however, because of the need for an

intermediate mechanical energy phase.

It should therefore be appreciated that there is a need for a dc-to-ac inverter that operates without any intermediate mechanical energy phase and that provides complete freedom to tailor the frequency, voltage, number of phases, and specific waveform shape of the ac power signal. The present invention aims to fulfill this need.

Accordingly, the invention provides, in a first aspect, apparatus for coverting dc electrical power to ac electrical power, comprising dc winding means and ac winding means, each winding means including a plurality of turns and being fixed in relation to one another; a ring of high permeability material encircling the winding means, in closely-spaced relationship, and switching means for selectively connecting dc electrical power to separate turns of the dc winding means in a prescribed sequence, to produce a magnetic flux pattern that rotates around the fixed position dc winding in a predetermined fashion thereby to induce an ac electrical power signal in the ac winding means.

In a further aspect, the invention provides apparatus for converting dc electrical power to ac electrical power, comprising dc winding means and ac winding means located on a common magnetic support structure, each winding means including a plurality of turns; a ring of high permeability material encircling the magnetic support structure, in closely-spaced relationship; a commutator including a plurality of bars, each connected to a separate turn of the dc winding means; dc power means including a brush assembly having a plurality of brushes in electrical contact with the commutator, for coupling dc electrical power to the dc winding means, to produce a magnetic flux pattern having a predetermined orientation relative to the brush assembly; and rotation means for rotating the brush assembly relative to the commutator, such that the magnetic field rotates correspondingly relative to the magnetic support structure and induces an ac electrical power signal in the ac winding means located thereon.

Thus, the invention provides significant advantages by providing apparatus for converting dc electrical power to ac electrical power without any intermediate mechanical energy phase and with complete freedom to

tailor the frequency, voltage, number of phases, and specific waveform of the ac power signal.

In one preferred arrangement, the apparatus includes a generally cylindrical magnetic support structure having a number of circumferentially-spaced, longitudinal slots, with a dc winding wound in the slots in a prescribed fashion, and with a housing of high permeability material encircling the support structure in a closely-spaced relationship. Switch means are included for selectively connecting dc electrical power to the separate turns of the dc winding in a prescribed sequence, to produce a magnetic flux pattern that rotates relative to the dc winding. An ac winding is wound in the same slots of the magnetic support structure, and the support structure, the dc and ac windings, and the housing are all fixed with respect to each other. The rotating magnetic flux pattern therefore induces an ac power signal in the ac winding without any intermediate mechanical energy phase. Since the dc an ac windings are physically independent of each other, the ac winding ca be appropriately configured to minimize harmonic distortion in the ac power signal and to provide the desired frequency, voltage and number of phases.

The switch means for switching dc power to the dc winding means can advantageously include a commutator having a number of separate bars, each connected to a separate turn of the dc winding, and a brush assembly having a number of brushes in electrical contact with the commutator. Rotation means are included for rotating the brush assembly relative to the commutator, to produce a magnetic flux pattern that rotates correspondingly relative to the magnetic support structure and, thus, relative to the ac winding, as well. This induces the ac power signal in the ac winding. Dc power is coupled to the rotating brush assembly by means of slip rings. Each brush in the brush assembly is sized always to contact a plurality of commutator bars, to reduce the voltage that develops from the successive electrical current reversals and thereby minimize arcing. This brush/-commutator configuration is particularly advantageous in situations where the use of semiconductor switches is considered inappropriate.

In order that the present invention may be better understood and so that further features thereof may be appreciated, an embodiment of the invention will now be described, by way of example, with reference to the accompanying drawings, in which:

FIGURE 1 is a simplified schematic diagram of an apparatus embodying the present invention, for converting dc electrical power to ac electrical power;

FIGURE 2 is a schematic diagram of a conventional four-pole simplex lap winding in a dc motor armature, which corresponds to one suitable configuration for the dc winding portion of the apparatus of the present invention;

FIGURE 3 is a schematic diagram of a conventional four-pole, three phase ac generator winding, which corresponds to one suitable configuration for the ac winding portion of the apparatus of the present invention; and

FIGURE 4 is a schematic, cross-sectional view of the dc and ac windings of one preferred apparatus of the invention, wound together on a common, fixed magnetic support structure.

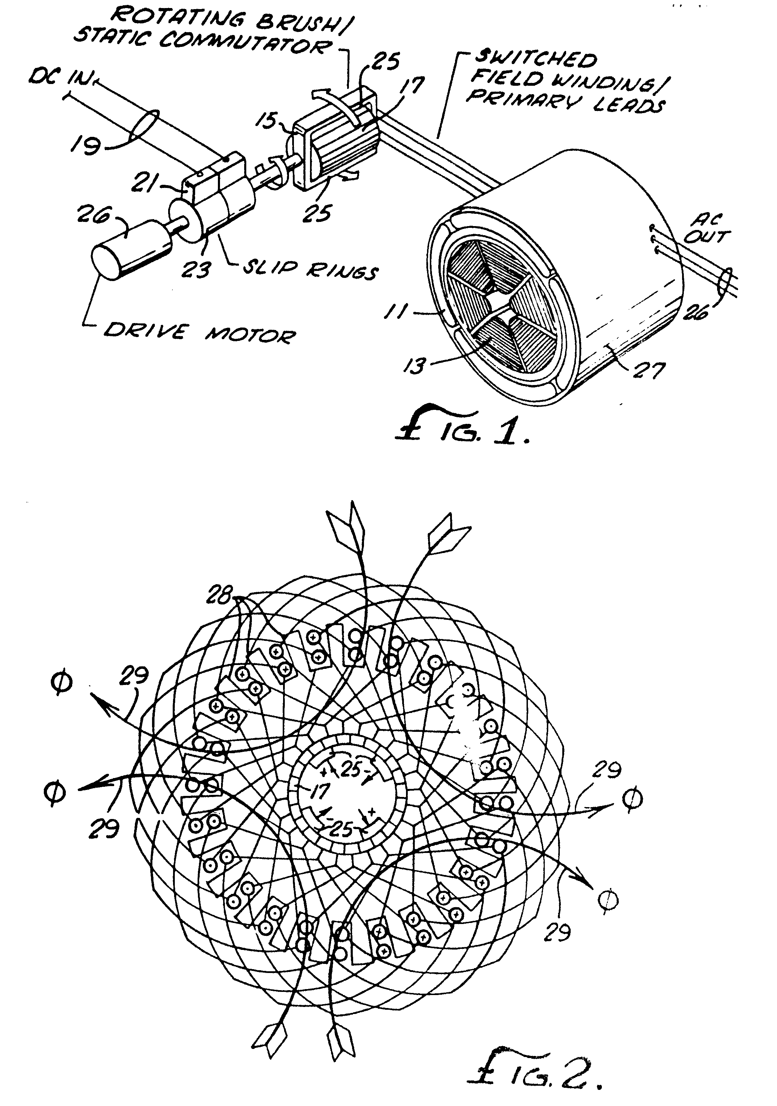

With reference now to the drawings, and particularly to Figure 1 there is shown a schematic diagram of an apparatus for converting dc electrical power to ac electric power, without an intermediate mechanical energy stage. An ac power signal is generated by a fixed ac winding 11 located in proximity to a similarly-fixed dc winding 13. In accordance with the invention, a dc power source is connected to successive turns of the dc winding in a prescribed sequence, to induce the ac power signal in the ac winding without the need for either winding to rotate. In particular, the dc winding receives the dc power from a special rotating brush assembly 15 and fixed commutator 17. The power inverter apparatus is extremely efficient, and has utility in many situations where prior apparatus of this kind were not feasible.

A dc power supply (not shown) supplies dc power to the rotating brush assembly 15 via lines 19 and a fixed pair of brushes 21, which electrically contact a corresponding pair of slip rings 23. Each brush 25 of the rotating brush assembly is electrically connected to a particular one of the slip rings.

The rotating brush assembly, in turn, supplies dc power to the fixed dc winding 13 via the commutator 17. The rotating brush assembly includes as many separate brushes as there are poles in the dc winding. If the brushes face radially inwardly, appropriate counterbalancing (not shown) might be required, to overcome the centrifugal force created by the rotation.

The commutator 17 includes a plurality of separate bars arranged to form a cylinder and separated from each other by suitable insultation, as is conventional. Each commutator bar is connected to a separate turn of the dc winding 13. A drive motor 26 rotates the slip rings 23 and rotating brush assembly 15. The drive motor can be of relatively small size, since its only load is the friction of the fixed brushes 21 on the slip rings 23 and the friction of the rotating brushes 25 on the commutator 17.

The dc winding 13 corresponds to the armature of a conventional dc motor. The rotating brush assembly 15 selectively connects dc power to the successive turns of the dc winding in such a fashion that a rotating magnetic flux is established. As is the case in a conventional dc motor, this magnetic flux is fixed relative to the brushes, but rotating relative to the winding. An iron housing 27 encircles the dc winding, as well as the ac winding 11 to complete the magnetic circuit.

The ac winding 11 corresponds to the stator of a conventional ac generator, generating an ac power signal in response to a rotating magnetic field within it. This ac power signal is output on lines 26. Here, the source of the rotating magnetic field is the fixed dc winding 13. Since no physical connection to the source of the rotating magnetic field is required for its proper operation, the ac winding produces an ac power signal even though the source of the field is, itself, fixed. In addition, the ac winding is appropriately configured to provide a selected voltage, frequency and number of separate phases. Further, and of importance in many applications, by proper selection of certain features of the ac windings (e.g., slots per pole per phase, distribution factor, slot span, pitch factor and skew), it is possible to cancel out substantially all undesired harmonics in the ac power signal, leaving a substantially pure sine wave. Such selection of ac winding characteristics is well-known to those skilled in the art of electrical machinery design.

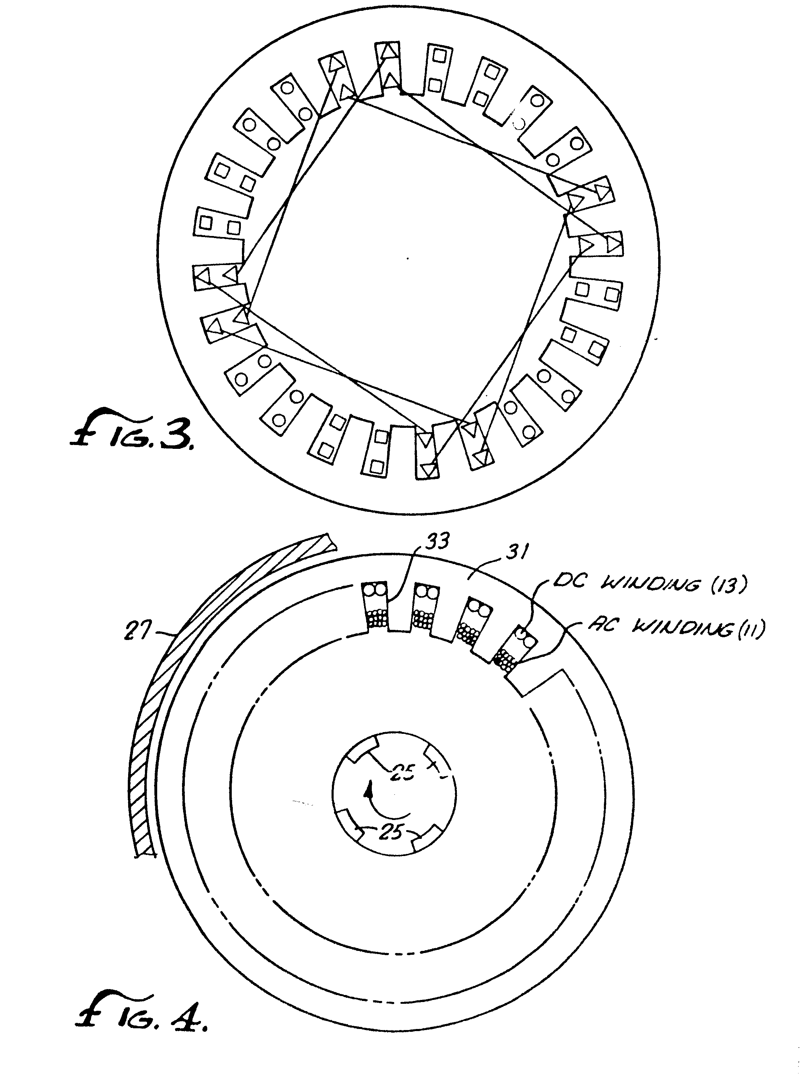

Figure 2 is a schematic diagram of a conventional four-pole simplex lap winding in the armature of a dc motor. This winding configuration can be used as the dc winding 13 in the apparatus of the invention. The commutator 17 and the brushes 25 of the rotating brush assembly 15 are depicted schematically at the centre of the winding. The successive turns of the winding are wound through selected ones of a plurality of circumferentially-spaced, longitudinal slots 28, with each turn being located in two separate slots located approximately 90 degrees apart.

At the particular brush locations depicted in Figure 2, electrical current flows into the slots 28 located in the upper left and lower right quadrants of the armature winding, and flows out of the slots located in the upper right and lower left quadrants. This produces a magnetic field having the orientation indicated by the arrows 29. The field rotates in the same angular direction and at the same rate as the brush assembly 15.

As is evident from Figure 2, electrical current flows from the two positive brushes by moving down the successive turns in the upper-left and lower-right quadrants of the dc winding 13 and up the successive turns in the upper-right and lower-left quadrants. As the brushes continue to rotate relative to the commutator 17, each soon moves out of electrical contact with one commutator bar and into electrical contact with another. This, of course, changes the flow of current through the various turns in such a way that the resulting magnetic field rotates around the winding at a corresponding rate.

Current continues to flow as a short-circuit current through each turn of the dc winding 14 when the corresponding commutator bar is momentarily contacted by one of the rotating brushes 25. The brushes preferably extend across at least two commutator bars at a time, to provide sufficient time for the current in the shorted turns to diminish to zero before the momentary contact ends and current through the turn is reversed. The current density across each brush is therefore much more uniform, and electromagnetic interference and arcing are significantly reduced. Relatively wide brushes also ensure that the lines of magnetic flux, which pass through the turns of the dc winding shorted by the comutator bars, are likewise relatively wide and thus provide a good coupling of energy to the ac winding 11.

Figure 3 is a schematic diagram of a conventional four-pole, three-phase ac generator winding that can be used in combination with a dc winding 13 such as that depicted in Figure 2, to carry out the present invention. For clarity, the diagram of Figure 3 contains only the connections for a single phase of the ac winding. As is conventional, the winding can be arranged in either a "Y" connection or a "delta" connection. The rotating magnetic field produced by the stationary dc winding located within the ac winding of Figure 3 induces an ac power signal in that ac winding.

In the preferred form of the invention, the dc winding 13 and ac winding 11 are not mounted on separate closely-spaced magnetic support structures. Rather, since both windings are stationary, they are conveniently wound onto a common support structure 31. One suitable configuration for such a magnetic support structure is depicted in Figure 4. It has a generally cylindrical shape with a series of longitudinal slots 33 uniformly spaced around its periphery. Each slot contains turns of both the dc winding and the ac winding, and these respective windings can be configured exactly as they are in Figures 2 and 3, respectively. Since the windings are separate from each other, the ac winding can be configured in such a fashion that undesired harmonics in the ac waveform are substantially eliminated, as described above.

In applications where semiconductor switches can be used, the rotating brush assembly 15 can be replaced by an appropriate arrangement of switches. In this alternative configuration, each bar of the commutator 17 in the embodiment of Figure 1 is replaced by a pair of oppositely-connected transistors, for selectively coupling electrical current either towards or away from the corresponding turn of the dc winding 13. The switches can be sequentially actuated by a straightforward recirculating counter circuit. In this alternative embodiment, no rotating elements are required.

It should be appreciated from the foregoing description that the present invention provides an improved apparatus for converting dc elec-

trical power to ac electrical power, without any intermediate mechanical energy phase. Dc electrical current is switched in a prescribed sequence through the various turns of a fixed dc motor armature, to produce a rotating magnetic flux that induces the desired ac power signal in an appropriately juxtaposed ac generator stator winding. The dc and ac windings are preferably wound together on a common fixed magnetic support structure.

The features disclosed in the foregoing description, in the following claims and/or in the accompanying drawings may, both separately and in any combination thereof, be material for realising the invention in diverse forms thereof.

CLAIMS:

1.   Apparatus for coverting dc electrical power to ac electrical power, comprising dc winding means and ac winding means, each winding means including a plurality of turns and being fixed in relation to one another; a ring of high permeability material encircling the winding means, in closely-spaced relationship, and switching means for selectively connecting dc electrical power to separate turns of the dc winding means in a prescribed sequence, to produce a magnetic flux pattern that rotates around the fixed position dc winding in a predetermined fashion thereby to induce an ac electrical power signal in the ac winding means.

2.   Apparatus according to Claim 1, wherein the dc and ac winding means are located on a common magnetic support structure.

3.   Apparatus according to Claim 1 or Claim 2, wherein the switching means comprises a commutator including a plurality of bars, each connected to a separate turn of the dc winding means; dc power means including a. brush assembly having a plurality of brushes in electrical contact with the commutator, for coupling dc electrical power to the dc winding means, to produce a magnetic flux pattern having a predetermined orientation relative to the brush assembly; and rotation means for rotating the brush assembly relative to the commutator, such that the magnetic flux pattern rotates correspondingly relative to the dc winding means thereby inducing an ac electrical power signal in the ac winding means located thereon.

4.   Apparatus for converting dc electrical power to ac electrical power, comprising dc winding means and ac winding means located on a common magnetic support structure, each winding means including a plurality of turns; a ring of high permeability material encircling the magnetic support structure, in closely-spaced relationship; a commutator including a plurality of bars, each connected to a separate turn of the dc winding means; dc power means including a brush assembly having a plurality of brushes in electrical contact with the commutator, for coupling dc electrical power to the dc winding means, to produce a magnetic flux pattern having a predetermined orientation relative to the brush assembly; and rotation means for rotating the brush assembly relative to the commutator, such that the magnetic field rotates correspondingly relative to the magnetic support structure and induces an ac electrical power signal in the ac winding means located thereon.

5. Apparatus according to Claim 3 or Claim 4, wherein the magnetic support structure, the ring, and the commutator are all fixed; the rotation means rotates the brush assembly around the fixed commutator; and the dc power means further includes a slip ring means for coupling dc elecrical power from a dc power source to the rotating brush assembly.

6. Apparatus according to Claim 5, wherein the rotation means includes an eletrical motor for rotating the brush assembly around the fixed commutator.

7. Apparatus according to any one of Claims 3 to 6, wherein each brush in the brush assembly is sized always to contact a plurality of bars of the commutator.

8. Apparatus according to any one of Claims 2 to 7, wherein the magnetic support structure includes a pluarlity of equal-spaced, longitudinally-aligned slots; and the dc winding means and ac winding means are each wound in the magnetic support structure slots.

9. Apparatus according to any one of Claims 2 to 8, having a generally cylindrical magnetic support structure with a plurality of circumerentially-spaced, longitudinal slots; the dc winding means and ac winding means wound in a prescribed fashion in the slots of the magnetic support structure a fixed metallic housing encircling the magnetic support structure, in a closely-spaced relationship, the support structure and dc and ac winding means all being fixed relative to the housing; and switch means for selectively connecting dc electrical power to the separate turns of the dc winding means in a prescribed sequence, to produce a magnetic flux pattern that rotates around the dc winding in a predetermined fashion and thereby induces an ac electrical power signal in the ac winding means; wherein the ac winding means is configured such that the ac power signal induced in it has a selected number of phases and a selected frequency and waveform shape.

10. Apparatus according to any one of Claims 1 to 9, wherein the ac winding means is configured such that the ac electrical power signal approximates a sine wave.

11. Apparatus for converting dc electrical power to ac electrical power, comprising: a generally cylindrical magnetic support structure having a plurality of circumferentially-spaced longitudinal slots; dc winding means wound in a prescribed fashion in the slots of the magnetic support structure; ac winding means wound in a prescribed fashion in the slots of the magnetic support structure; a fixed metallic housing encircling the magnetic support structure, in closely-spaced relationship, the support structure and dc and ac winding means all being fixed relative to the housing; a commutator having a plurality of bars, each connected to a separate turn of the dc winding means; a rotatable brush assembly having a plurality of brushes in electrical contact with the commutator, for coupling dc electrical power to the dc winding means, to produce a magnetic flux pattern having a predetermined orientation relative to the brush assembly, wherein each brush is sized always to contact a plurality of bars of the commutator; and means for rotating the brush assembly around the commutator, to rotate the magnetic flux pattern at a corresponding rate and thereby induce an ac electrical power signal in the ac winding means, wherein the ac winding means is configured such that the ac power signal induced in it has a selected number of phases and a selected frequency on substantially sinusoidal waveform.

ROTATING BRUSH/ STATIC COMMUTATOR

DC IN

SWITCHED FIELD WINDING/ PRIMARY LEADS

19

15

25

17

21

25

26

23 — SLIP RINGS

DRIVE MOTOR

11

13

27

AC OUT

26

_FIG. 1.

28

29

17

+25

-25

29

29

29

29

_FIG. 2.

FIG. 3.

FIG. 4.

33　31　DC WINDING (13)

27　AC WINDING (11)

25

25